# EUROPÄISCHE PATENTSCHRIFT

(11) **EP 0 639 929 B1**
(45) Veröffentlichungstag und Bekanntmachung des Hinweises auf die Patenterteilung: **14.01.2004**
(21) Anmeldenummer: 93306625.0
(22) Anmeldetag: 20.08.1993
(51) Int. Cl.: H04Q 7/36

(54) **Verfahren und Anordnung zur hybriden Kanalzuteilung in einem Mobilfunksystem**
Method and apparatus for hybrid channel assignment in a mobile radio system
Procédé et dispositif pour attribution hybride des canaux dans un système radio-mobile

(43) Veröffentlichungstag der Anmeldung: 22.02.1995
(73) Patentinhaber: SIEMENS AKTIENGESELLSCHAFT, 80333 München (DE)
(72) Erfinder: Lüders, Christian Dr. Dipl.-Phys., D-85540 Haar (DE); Foster, Michael, Whiteparish, Salisbury (GB); McCann, Stephen, Rownhams, Southampton (GB)

(56) Entgegenhaltungen:
- PATENT ABSTRACTS OF JAPAN vol. 8, no. 198 (E-265) & JP-A-59 085 419 (NIPPON DENKI KK)
- IEEE NATIONAL TELECOMMUNICATIONS CONFERENCE Bd. 4 , 1981 , NEW ORLEANS, LA, USA G.NEHME ET AL. 'SPECTRAL EFFICIENCY OF THE HYBRID CHANNEL ASSIGNMENT SCHEME, AS COMPARED TO THE FIXED ONE, IN CELLULAR LAND-MOBILE SYSTEMS'
- IEEE INTERNATIONAL CONFERENCE ON COMMUNICATIONS: INTEGRATING COMMUNICATION FOR WORLD PROGRESS (ICC '83) Bd. 1 , 19. Juni 1983 , BOSTON, MA, USA Seiten 569 - 573 M.MCDONNELL ET AL. 'SIMULATION STUDY OF A SIGNALLING PROTOCOL FOR CELLULAR MOBILE RADIO SYSTEMS WITH HYBRID VOICE CHANNEL ASSIGNMENT AND A BLOCKED-CALLS-HELD SERVICE DISCIPLINE'

## Beschreibung

Die Erfindung bezieht sich auf ein Verfahren zur Kanalzuteilung gemäß dem Oberbegriff des Patentanspruchs 1. Weiterhin bezieht sich die Erfindung auf ein Mobilfunksystem zur Durchführung des Verfahrens, sowie auf eine zugehörige Basisstation.

Bei einem Mobilfunksystem ist üblicherweise eine zu versorgende Fläche in eine große Anzahl von Funkzellen eingeteilt. In diesen Zellen sind jeweils Basisstationen vorgesehen, über die die Verbindungen zwischen einem öffentlichen Telefonnetz und den Mobilfunkgeräten der einzelnen Teilnehmer in der jeweiligen Zelle hergestellt werden können. Ein derartiges Mobilfunksystem ist beispielsweise das vom European Telecommunication Standards Institute (ETSI) standardisierte GSM (Global System for Mobile Communication). Ein ähnliches System ist das DCS 1800/PCN.

Üblicherweise werden bei dem GSM den einzelnen Basisstationen mittels einer vorherigen Frequenzplanung die Funkkanäle fest zugeordnet. Diese Frequenzplanung beruht auf einer Schätzung des Teilnehmerverhaltens, das sich beispielsweise in der Verkehrslast bemerkbar macht, sowie auf einer vorherigen Messung oder Berechnung der Gleich- und Nachbarkanalstörungen, die auch unter dem Namen Interferenzen bekannt sind.

Es ist aus der DE-OS 2 423 477 bereits bekannt, als Alternative zur festen Kanalzuteilung eine dynamische Kanalzuteilung in Sektoren einer Zelle durchzuführen. Bei dieser bekannten dynamischen Kanalzuteilung werden die Frequenzen der Sende/Empfangseinrichtungen an den Basisstationen durch einen Zentralprozessor gesteuert. Die Steuerung wird dabei zweckmäßigerweise derart durchgeführt, daß eine Anpassung an eine stärkere Verkehrsbelastung in einem Sektor durch Abziehen von Kanälen in weniger belasteten Sektoren erfolgt.

Bei einer Frequenzplanung wird darauf geachtet, daß die Interferenzen minimal sind. Falls sich bei einem derartigen Nachrichtensystem die Funkausbreitungsbedingungen beispielsweise aufgrund von baulichen Veränderungen im Gebiet unerwartet verändern, kann sich das System nicht ohne weiteres an die neuen Gegebenheiten anpassen. Die Planung müßte in jedem Fall den ungünstigsten Fall bei der Verkehrsbelastung und bei den Interferenzen berücksichtigen und nach einem Sicherheitszuschlag den Wiederverwendungsabstand eines Funkkanals und/oder die Anzahl der Kanäle pro Basisstation berücksichtigen, was eine Kapazitätsverschwendung darstellt.

Zur Anpassung an Veränderungen der Verkehrslast bietet sich als Alternative zur dynamischen Kanalzuteilung zwar eine Übergabe (Handover) von Teilnehmern von stark belasteten Basisstationen auf weniger belasteten Basisstationen an, jedoch führt ein derartiges Verfahren zu einem erhöhten Signalisierungsaufkommen für die Durchführung der Übergaben und zu einer Verschlechterung der Interferenzverhältnisse im Funknetz, da einige Mobilstationen von Basisstationen versorgt werden, zu denen sie aufgrund der Empfangsverhältnisse eigentlich nicht gehören.

Aus IEEE National Telecommunications Conference, Bd.4, 1981, New Orleans, LA, USA, G.Nehme et al., "Spectral Efficiency of the hybrid channel assignment scheme, as compared to the fixed one, in cellular land-mobile-systems", und aus IEEE International Conference of Communications: Integrating communication for world progress (ICC'83), Bd.1, 19.Juni1983, Boston, MA, USA, Seiten 569 - 573, M. McDonnell et al, "Simulation study of a signalling protocol for cellular mobile radio systems with hybrid voice channel assignment and a blocked-calls-held service discipline" sind Verfahren bekannt, bei denen ein ankommendes Gespräch in einer Funkzelle entweder mittels eines der Basisstation fest zugeteilten Kanals abgewickelt wird oder bei dem das ankommende Gespräch durch einen dynamisch zuteilbaren Kanal abgewickelt wird. Die Zuteilung eines dynamischen Kanals erfolgt dabei abhängig von den Abständen zwischen den Funkzellen, die systembedingt festgelegt werden, wodurch die Zuteilung wiederum beschränkt wird.

Der Erfindung liegt daher die Aufgabe zugrunde, ein Verfahren und eine Anordnung anzugeben, bei dem mit einem geringen Aufwand eine effiziente Kanalzuteilung ermöglicht wird.

Erfindungsgemäß wird die Aufgabe bei dem Verfahren, dem Mobilfunksystem und der Basisstation der eingangs genannten Art durch die in den kennzeichnenden Teilen der Patentansprüche 1, 19 bzw. 20 angegebenen Merkmale gelöst. Weiterbildungen der Erfindung ergeben sich aus den Unteransprüchen.

Bei der Erfindung handelt es sich um eine Kombination aus fester und aus dynamischer Kanalzuteilung. Gemäß der Erfindung wird immer zunächst ein geeigneter Kanal auf einer festgelegten Frequenz ausgewählt und nur wenn dieser nicht vorhanden ist, greift man auf einen Kanal auf einer dynamisch zuteilbaren Frequenz zurück.

Zur Vermeidung von Gesprächsabbrüchen kann eine gewisse Anzahl von Kanälen mit geringer Störleistung auf den fest vorgegebenen Frequenzen für eine Übergabe (Handover) reserviert werden.

Bei einer idealen dynamischen Kanalzuteilung sollte die Basisstation in der Lage sein, gleichzeitig auf allen dem System verfügbaren Frequenzen senden und empfangen zu können. Eine Realisierung dieser idealen Methode würde aber einen erheblichen Hardwareaufwand mit sich bringen, da jede Basisstation mit einer großen Anzahl von Sende- und Empfangseinrichtungen ausgestattet sein müßte.

Bei der vorliegenden Methode zur dynamischen Kanalzuteilung wird dagegen davon ausgegangen, daß die Anzahl der Sende- und Empfangseinrichtungen pro Basisstation auf eine kleine Anzahl (nämlich auf einen Bruchteil aller im System verfügbaren Frequenzen) beschränkt wird.

Die Basisstation soll zwar noch in der Lage sein, auf jeder beliebigen im System verfügbaren Frequenz zu senden und zu empfangen, jedoch ist die Anzahl der Frequenzen, die an einer Basisstation gleichzeitig verwendet werden können, durch die Anzahl des Sende- und Empfangseinrichtungen beschränkt.

Da zudem im GSM-System jede Frequenz aus 8 Zeitschlitzen besteht, kommt es darauf an, die begrenzte Anzahl der dynamisch zuteilbaren Frequenzen effizient zu nutzen, d.h. möglichst viele Zeitschlitze auf einer bereits zugeteilten Frequenz zu benutzen, bevor eine neue zusätzliche Frequenz ausgewählt wird. Das geschieht, indem man zunächst nach einem geeigneten Zeitschlitz auf einer bereits an der jeweiligen Basisstation zugeteilten neuen dynamisch zuteilbaren Frequenz gesucht wird, und nur falls ein solcher nicht vorhanden ist nach einem geeigneten Zeitschlitz auf einer neuen dynamisch zuteilbaren Frequenz sucht, die höchstens bei einer möglichst weit entfernten Basisstation verwendet wird. Die Verwendung in großer Entfernung erkennt man daran, daß die Störleistung auf dem auf der jeweiligen Frequenz am meisten gestörten Zeitschlitz möglichst gering ist. Außerdem erfolgt eine effiziente Verwendung dadurch, daß ein Gespräch von einer dynamisch zuteilbaren Frequenz, auf der nur wenige, beispielsweise ein oder zwei, Kanäle belegt sind auf einen geeigneten Zeitschlitz auf einer anderen Frequenz verlegt wird, um diese dynamisch zuteilbare Frequenz nach Möglichkeit wieder freizugeben. Dieser Vorgang wird im folgenden als Re-allocation bezeichnet.

Ein neu zuzuteilender Nutzkanal wird unter den unbelegten (dynamisch zuteilbaren oder festen) Kanälen der jeweiligen Basisstation so ausgewählt, daß ein hinreichendes Nutz- zu Störverhältnis (C/I-Verhältnis) zu erwarten ist. Die Störleistung kann dabei aufgrund von Messungen auf den unbelegten Kanälen durch die jeweilige Basisstation abgeschätzt werden. Eine derartige Abschätzung der Nutzleistung ist im GSM/PCN-Standard bereits vorgesehen. Die Abschätzung erhält man beim Gesprächsaufbau aus dem auf dem Signalisierungskanal gemessenen Empfangspegel, bei einem Wechsel des Nutzkanals bei der gleichen Basisstation (Intracell Handover) aus dem gemessenen Empfangspegel auf dem alten Nutzkanal. Bei einer Übergabe von einer Basisstation zu einer anderen (Intercell Handover) ist eine möglichst niedrige zu erwartende Störleistung das Auswahlkriterium, denn zumindest bei einem Wechsel zwischen Basisstationen, die zu unterschiedlichen Steuereinheiten gehören (Externer Intercell Handover) steht ein Schätzwert für die Nutzleistung nicht zur Verfügung.

Bei dem genannten GSM/PCN-Standard wird für einen reibungslosen Kontakt zwischen Mobilstation und Basisstation mindestens eine Frequenz pro Basisstation fest vergeben werden. Auf dieser Frequenz sind die Kanäle unterzubringen, die von allen Mobilstationen gemeinsam genutzt werden. Dieses sind die sogenannten Broadcast Channels zur Verteilung allgemeiner Systeminformationen und zum anderen die sogenannten Common Control Channels, die zur ersten Kontaktaufnahme zwischen der Mobilstation und der Basisstation vor der Zuteilung eines spezifischen Kanals benutzt werden.

Ferner sollen auf dieser (oder eventuell einer anderen) fest zugeteilten Frequenz die sogenannten Stand Alone Dedicated Control Channels (SDCCH) untergebracht werden, die der Signalisierung (z.B. Authentifikation eines Teilnehmers) dienen, die unmittelbar der Zuteilung eines Nutzkanals vorausgeht. Auf diesen Kanälen wird der Empfangspegel gemessen und damit ist es möglich, die Empfangsleistung des Nutzsignals auf dem danach zuzuteilenden Nutzkanal abzuschätzen und diese Abschätzung bei der Zuteilungsentscheidung zu verwenden. Zusätzlich zu diesen festen Frequenzen wird eine bestimmte Anzahl von Frequenzen zur dynamischen Zuteilung zur Verfügung gestellt. Jede Basisstation kann im Prinzip jede dieser Frequenzen zuteilen, aber zweckmäßigerweise nur eine geringe Anzahl gleichzeitig.

Die Erfindung läßt sich nutzbringend insbesondere dann verwenden, wenn die Interferenz- oder Verkehrsverhältnisse schwer vorhersehbar sind oder rasch wechseln. Sie kann ohne weiteres in ein bestehendes System nach dem GSM-Standard oder dem ebenfalls bekannten PCN-Standard eingefügt werden und widerspricht nicht den dort festgelegten Signalisierungsabläufen. Bei der Erfindung sollte die Basisstation in der Lage sein, auf einer vorgegebenen Anzahl von Frequenzen zu senden und zu empfangen, nicht jedoch auf allen Freqenzen gleichzeitig. Damit kann die Zahl der gleichzeitig zuteilbaren Frequenzen deutlich kleiner sein als die Anzahl der im System verfügbaren Frequenzen, welche eine Reduktion des Hardware-Aufwandes bedeutet.

Ein Ausführungsbeispiel der Erfindung wird im folgenden anhand von Zeichnungen näher erläutert. Es zeigen:
- Fig.1: ein Blockbild eines Mobilfunksystems,
- Fig.2: einen Frequenzplan,
- Fig.3: eine Kanalzuteilung bei einem Gesprächsaufbau,
- Fig.4: eine Kanalzuteilung bei einer Übergabe innerhalb einer Zelle,
- Fig.5: eine Kanalzuteilung bei einer Übergabe zwischen unterschiedlichen Zellen,
- Fig.6: die Auswahl eines von mehreren dynamisch zuteilbaren Kanälen,
- Fig.7: die Auswahl eines Kanals auf bereits ausgewählten dynamisch zuteilbaren Frequenzen,
- Fig.8: die Auswahl eines Kanals auf einer noch nicht ausgewählten dynamisch zuteilbaren Frequenz,
- Fig.9: die Suche nach einem geeigneten Kanal auf einer noch nicht zugeteilten dynamisch zweiteilbaren Frequenz,
- Fig. 10: die Auswahl eines Kandidaten für eine Re-allocation, und
- Fig.11: einen Re-allocationvorgang.

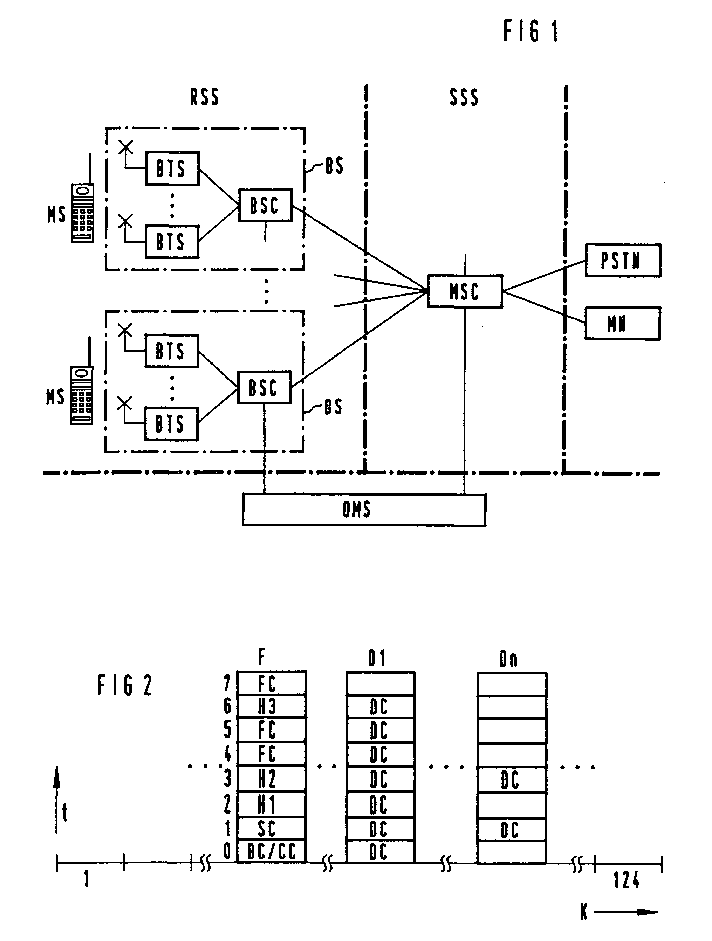

Das in Fig. 1 dargestellte Mobilfunksystem enthält mehrere Systemeinheiten, nämlich ein Vermittlungssystem SSS, ein Funksystem RSS und ein Bedien- und Wartungssystem OMS. Das Vermittlungssystem SSS enthält eine Steuereinheit MSC, die die Verbindung zwischen dem Funksystem RSS und einem öffentlichen Telefonnetz PSTN, beispielsweise einem ISDN-Netz oder einem anderen mobilen Netz MN, herstellt. Das Funksystem RSS wird eingeteilt in Basisstationen BS und Mobilstationen MS. Die Basisstationen BS stellen alle Funktionen zur Verfügung, die erforderlich sind, um eine Funkdeckung zu gewährleisten, und die Mobilstationen stellen alle Funktionen für den Teilnehmer bereit. Die Basisstationen BS umfassen jeweils eine Basisstationssteuerung BSC und mindestens eine Basisfunkstation BTS.

Die Basisstationssteuerung BSC führt alle Funktionen für die Steuerung der Funkübertragung durch, bearbeitet lokale Vorgänge und führt Wartungsvorgänge aus. Eine Basisstationssteuerung BSC verwaltet bis zu 16 Basisfunkstationen BTS. Die Basisfunkstationen BTS führen alle funktechnischen Funktionen aus und sie unterstützen die Funkschnittstelle zu den Mobilstationen MS. Eine Basisfunkstation BTS versorgt eine oder mehrere Zellen einer zu versorgenden Fläche. Weitere Einzelheiten eines derartigen Mobilfunksystems sind beispielsweise in einer Broschüre "D 900 Mobile Communication System" SYD der Siemens AG beschrieben.

Für eine Verbindung zwischen einer Basisstationen BS und einer Mobilstation MS können Frequenzen aus einem vorgegebenen Frequenzband verwendet werden. Bei dem GSM werden beispielsweise in Richtung zu und von der Mobilstation MS jeweils 124 Funkkanäle mit einer Bandbreite von 200 kHz in einem Frequenzband von 890-915 bzw. 935-960 MHz verwendet. Von benachbarten Basisfunkstationen BTS werden dabei möglichst keine benachbarten Funkkanäle benutzt, um eine gegenseitige Interferenz zu vermeiden. Die Mobilstationen MS können dabei ein beliebiges Paar der 124 Funkkanäle benutzen. Die Entscheidung, welches Funkkanalpaar für eine bestimmte Verbindung verwendet werden soll, wird in der Basisstationssteuerung BSC getroffen und in einem Signalisierungskanal zur Mobilstationen MS übertragen.

Ein übliches Übertragungssystem ist gegenwärtig ein Zeitmultiplexsystem, das unter der Bezeichnung Time Division Multiplex Access (TDMA) bekannt ist. Dieses System ist eine Kombination aus Frequenzmultiplex und Zeitmultiplex mit 8 Nutzoder Signalisierungskanälen, die über einen Funkkanal übertragen werden. Da die Funkkanäle entsprechend einem Zeitmultiplexverfahren aufgeteilt werden, können beispielsweise über einen Funkkanal mit der Bandbreite von 200 kHz 8 Kanäle in entsprechenden Zeitschlitzen zeitlich nacheinander übertragen werden.

Bei der Darstellung in Fig. 2 sind die 124 Funkkänäle für eine Verbindung von einer Basisfunkstation BTS zu einer Mo bilstationen MS schematisch dargestellt. In Abszissenrichtung sind die Kanäle K und in Ordinatenrichtung ist die Zeit t dargestellt. Innerhalb der 124 Funkkanäle, die im folgenden als Frequenzen bezeichnet werden, sind jeweils 8 Zeitschlitze vorgesehen. Bei dem Mobilfunksystem gemäß der vorliegenden Erfindung wird mindestens eine Frequenz für jede Basisstation BS fest vorgegeben. Diese Frequenzen werden im folgenden als FCA (Fixed Channel Allocation)-Frequenzen bezeichnet. Sie werden von dem Broadcast Control Channel BC und Common Control Channels CC sowie von den Stand Alone Dedicated Control Channels SC benutzt. Zusätzlich zu dieser festen Zuteilung von Kanälen auf der FCA-Frequenz F werden weitere Frequenzen und Kanäle im System dynamisch zugeteilt. Dies ist durch die dynamisch zuteilbaren Frequenzen D1 und Dn schematisch dargestellt. Diese Frequenzen D1 und Dn werden im folgenden als DCA (Dynamic Channel Allocation)-Frequenzen bezeichnet. Die feste Zuteilung der FCA-Frequenz F erfolgt nach einer entsprechenden Frequenzplanung, während die dynamische Zuteilung aufgrund der aktuellen Nachrichtenverkehrsverhältnisse und Interferenzbedingungen erfolgt. Aus Aufwandsgründen ist es dabei im Hinblick auf die Sende-/Empfangseinrichtungen zweckmäßig, nur eine begrenzte Anzahl von DCA-Frequenzen von jeder Basisstation BS gleichzeitig zuteilen zu lassen. Um diese begrenzte Anzahl von DCA-Frequenzen effizient benutzen zu können, ist das Zuteilungsverfahren vorgesehen, das im folgenden näher erläutert wird.

Die Zuteilungsentscheidung wird bei dem vorliegenden Ausführungsbeispiel derart durchgeführt, daß sie konform ist mit den GSM-Empfehlungen und in der Basisstation BS getroffen werden kann. Die Grundlage für die Entscheidung bildet in der Regel eine Messung der Störleistung der von der Mobilstation MS gesendeten und von der Basisfunkstation BTS empfangenen Signale. Diese Messung wird in der Basisfunkstation BTS durchgeführt und der Basisstationssteuerung BSC mitgeteilt. Bei der Zuteilung werden dabei folgende Fälle unterschieden:
a) Die Zuteilung eines Signalisierungskanals,
b) die erste Zuteilung eines Nutzkanals nach einer erfolgreichen Signalisierung,
c) der Wechsel eines Nutzkanals an der gleichen Basisfunkstation BTS (Intracell Handover), und
d) ein Wechsel der versorgenden Basisfunkstation BTS während eines Gesprächs (Intercell Handover).

Die Signalisierungskanäle BC und CC werden im Zeitschlitz 0, und der Signalisierungskanal SC im Zeitschlitz 1 untergebracht. Weiterhin werden auf der FCA-Frequenz F mehrere Zeitschlitze, d.h. mehrere Kanäle für einen Wechsel (Handover) reserviert. Beispielsweise werden 3 Kanäle H1 bis H4 auf der FCA-Frequenz F reserviert. Welche Kanäle reserviert werden richtet sich nach dem gemessenen Interferenzpegel. Es werden diejenigen reserviert, für die dieses am niedrigsten ist.

Für die Zuteilung eines Nutzkanals mißt die Basisfunkstation BTS den Empfangspegel der von der Mobilstation MS abgegebenen Signale und gibt diese an die Basisstationssteuerung BSC ab. Bei der Zuteilung eines Signalisierungskanals CC erfolgt jedoch keine Interferenzmessung, und damit kann jeder Signalisierungskanal zugeteilt werden.

Bei der Auswahl eines Nutzkanals nach einer erfolgreichen Signalisierungsphase, d.h. nach einem erfolgreichen Gesprächsaufbau mit einer Mobilstation MS unter Verwendung des Signalisierungskanals SC berücksichtigt die Basisstationssteuerung BSC den von der Basisfunkstation BTS aus den empfangenen Signalen ermittelten Interferenzpegel auf den jeweils unbelegten Kanälen. Die Differenz aus dem Empfangspegel auf den Signalisierungskanal SC und dem Interferenzpegel auf einem Nutzkanal kann für den Fall, daß die Sendeleistungen auf dem Signalisierungskanal SC und auf dem Nutzkanal gleich groß sind, als Schätzwert für das C/I Verhältnis (gemessen in dB) auf einem möglichen Nutzkanal verwendet werden. Falls die Sendeleistungen unterschiedlich sind, ist die entsprechende Differenz hinzuzuaddieren. Um einen Nutzkanal zuzuteilen, muß das C/I Verhältnis einen vorgegebenen Schwellenwert SM überschreiten. Dieser Schwellenwert SM sollte beispielsweise größer sein als das vom GSM geforderte C/I Verhältnis von 9 dB. Damit wird verhindert, daß sofort eine Übergabe (Handover) auf einen anderen Kanal oder ein Gesprächsabbruch erfolgt, wenn die Qualität der Verbindung unmittelbar nach der Zuteilung des Nutzkanals abfällt. Der Wert des Schwellenwerts SM muß daher mit den Schwellenwerten beim Handover harmonisieren. Andererseits darf der Schwellenwert SM auch nicht zu hoch sein, da sonst eine zu hohe Blockierwahrscheinlichkeit auftritt.

Die in Fig. 2 dargestellten übrigen freien Kanäle auf der FCA-Frequenz F und den DCA-Frequenzen D können von der Basisstation BS entsprechend der Verkehrslast und den Interferenzbedingungen vergeben werden.

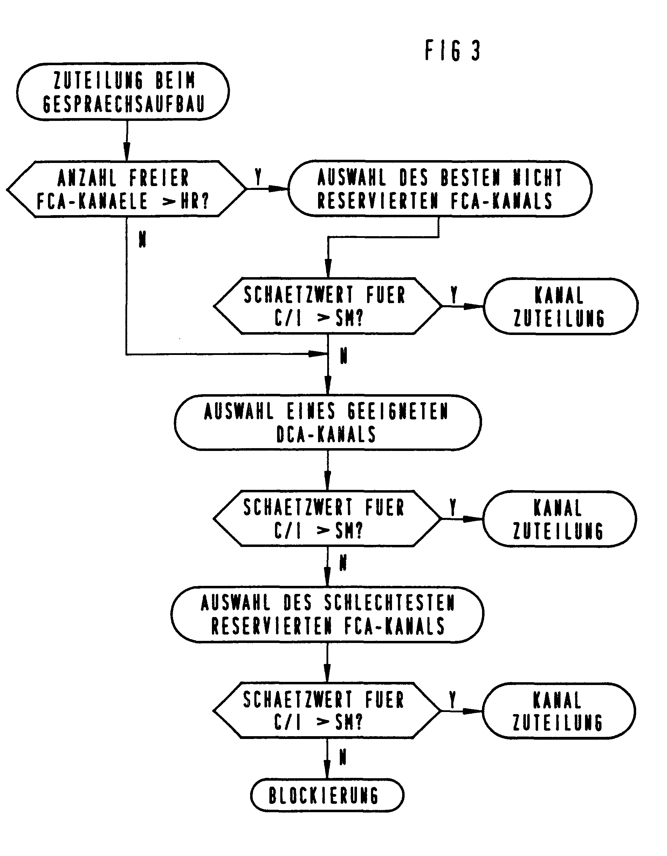

Bei dem in Fig. 3 dargestellten Zuteilungsverfahren für den Gesprächsaufbau wird zunächst geprüft, ob die Anzahl der verfügbaren freien Kanäle auf der FCA-Frequenz F größer ist als ein Wert HR, der angibt, wieviele Kanäle für ein Handover reserviert sein sollen. Bei dem in Fig. 2 dargestellten Beispiel ist diese Zahl HR = 3. Falls die Anzahl der freien Kanäle größer ist, wird als Nutzkanal der beste nichtreservierte Kanal auf der FCA-Frequenz F zugeteilt. Zur Ermittlung des besten nichtreservierten Kanals wird geprüft, wessen C/I-Verhältnis größer ist als der Schwellenwert SM. Falls kein freier Kanal auf der FCA-Frequenz F zur Verfügung steht oder das C/I-Verhältnis der freien Kanäle nicht größer ist als der Schwellenwert SM, wird ein geeigneter Kanal auf den DCA-Frequenzen D ausgewählt. Diese Auswahl wird unten näher erläutert. Vor der Zuteilung wird wiederum geprüft, ob der Schätzwert für das C/I-Verhältnis größer ist als der Schwellenwert SM. Falls dies der Fall sein sollte, wird der entsprechende Kanal zugeteilt. Andernfalls wird der schlechteste für ein Handover reservierte Kanal auf der FCA-Frequenz F ausgewählt. Falls jedoch auch dessen C/I-Verhältnis kleiner ist als der Schwellenwert SM, wird die Zuteilung eines Nutzkanals blockiert.

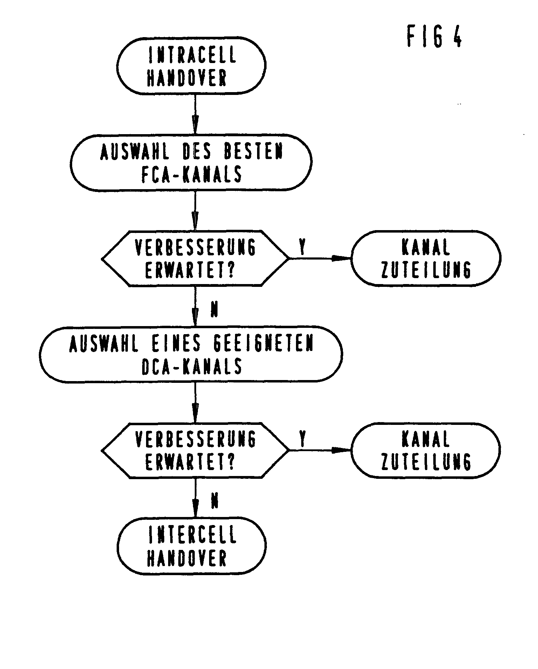

Bei der in Fig. 4 dargestellten Kanalzuteilung wird angenommen, daß ein Handover innerhalb einer Zelle erforderlich ist (Intracell Handover). Als Schätzwert für das C/I-Verhältnis wird beim Intracell Handover die Differenz zwischen dem Empfangspegel auf dem alten Nutzkanal und dem Interferenzpegel auf dem neuen Nutzkanal verwendet. Hierbei wird wieder angenommen, daß die Sendeleistungen auf beiden Nutzkanälen gleich groß sind. Andernfalls müßte hier ebenfalls die Differenz der Sendepegel hinzuaddiert werden. Ein Intracell Handover zu dem neuen Nutzkanal wird nur dann durchgeführt, wenn eine deutliche Qualitätsverbesserung zu erwarten ist. Die Qualität auf dem alten Nutzkanal wird beispielsweise im GSM anhand von Messungen der Bitfehlerrate ermittelt und die Qualität auf den neu zugeteilten Nutzkanal kann aus dem Schätzwert für das C/I-Verhältnis und aus dem Empfangspegel bestimmt werden. Zu diesem Zweck können beispielsweise aus Simulationen gewonnene Tabellen für die Zuordnung des C/I-Verhältnisses und des jeweiligen Empfangspegels in Bitfehlerraten verwendet werden. Ein neuer Nutzkanal wird nur dann zugeteilt, wenn die auf diese Weise ermittelte Qualität die Qualität im alten Nutzkanal um einen vorgegebenen Schwellenwert überschreitet.

Beim Intracell Handover wird zunächst der beste Kanal auf der FCA-Frequenz F ausgewählt. Dann wird geprüft, ob eine Verbesserung zu erwarten ist. Hierzu wird untersucht, ob die Qualität des Kanals auf der FCA-Frequenz F als neuer Nutzkanal um einen Schwellenwert besser ist als diejenige des alten Nutzkanals. Wenn dies der Fall ist, wird dieser Kanal zugeteilt. Falls keine Verbesserung erwartet wird, wird ein geeigneter Kanal auf einer Frequenz D als neuer Nutzkanal ausgewählt. Diese Auswahl ist unten näher erläutert. Auch hier wird zuerst geprüft, ob die erwartete Qualität auf dem neuen Nutzkanal um den Schwellenwert besser ist als diejenige des alten Nutzkanals. Wenn dies der Fall sein sollte, wird der neue Nutzkanal zugeteilt. Andernfalls wird ein Handover zu einer anderen Zelle (Intercell Handover) initialisiert.

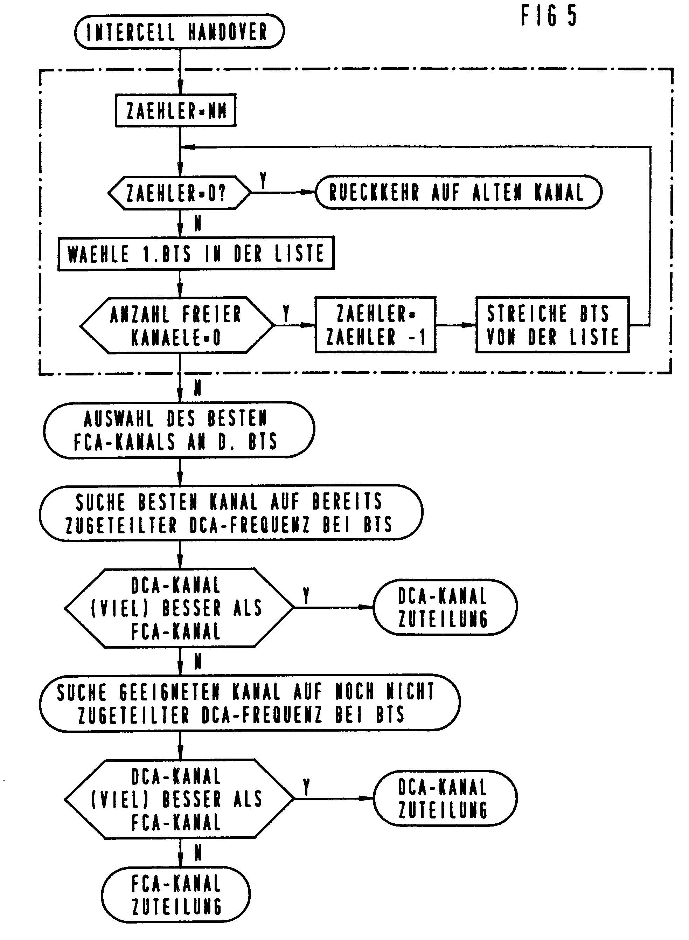

Bei dem in Fig. 5 dargestellten Intercell Handover wird, wie es in dem gestrichelt gekennzeichneten Bereich dargestellt ist, zuerst nach einer Ziel-Basisfunkstation BTS gesucht, die unbelegte Kanäle auf der FCA-Frequenz F aufweist. Die Basisstation BS erkennt durch Messungen durch die Mobilstation MS die Basisfunkstationen BTS, die für einen Handover infrage kommen. Die Mobilstation MS führt zu diesem Zweck beispielsweise beim GSM Pegelmessungen auf den Frequenzen der Kanäle BC der Nachbarzellen durch. Aufgrund dieser Messungen wird die Reihenfolge der möglichen Basisfunkstationen BTS in einer Liste festgelegt. Die maximale Anzahl der infragekommenden Basisfunkstationen BTS wird in einem Zähler als Wert NM gespeichert. Falls der Zählerinhalt Null ist, d.h. keine Basisfunkstation BTS infrage kommt, bleibt die Mobilstation auf dem alten Kanal. Andernfalls wird die erste Basisfunkstation BTS der Liste ausgewählt. Falls ein freier Kanal auf der FCA-Frequenz F zur Verfügung steht, wird von diesem der beste ausgewählt. Andernfalls wird der Zähler um eine Einheit vermindert und diese Basisfunkstation BTS wird von der Liste gestrichen und der Vorgang wird solange wiederholt, bis dann ein geeigneter freier Kanal auf der FCA-Frequenz F gefunden ist. Anschließend wird noch der beste Kanal auf einer bereits zugeteilten DCA-Frequenz D dieser Basisfunkstation BTS gesucht und geprüft, ob dieser Kanal besser ist als der Kanal auf der FCA-Frequenz F. Wenn dies der Fall ist, wird dieser Kanal zugeteilt. Andernfalls wird ein geeigneter Kanal auf einer noch nicht zugeteilten DCA-Frequenz D gesucht und dieser dann zugeteilt, falls er besser ist als der Kanal auf der FCA-Frequenz F. Andernfalls wird der Kanal auf der FCA-Frequenz F zugeteilt.

Da im Fall eines externen Intercell Handovers, d.h. eines Handovers zu einer Basisfunkstation BTS, die einer anderen Basisstationsteuerung BSC zugehört, nicht möglich ist, das C/I-Verhältnis der neuen Verbindung zu schätzen, weil keine Informationen über den neuen Empfangspegel zur Verfügung stehen, erfolgt in diesem Fall kein Qualitätsvergleich.

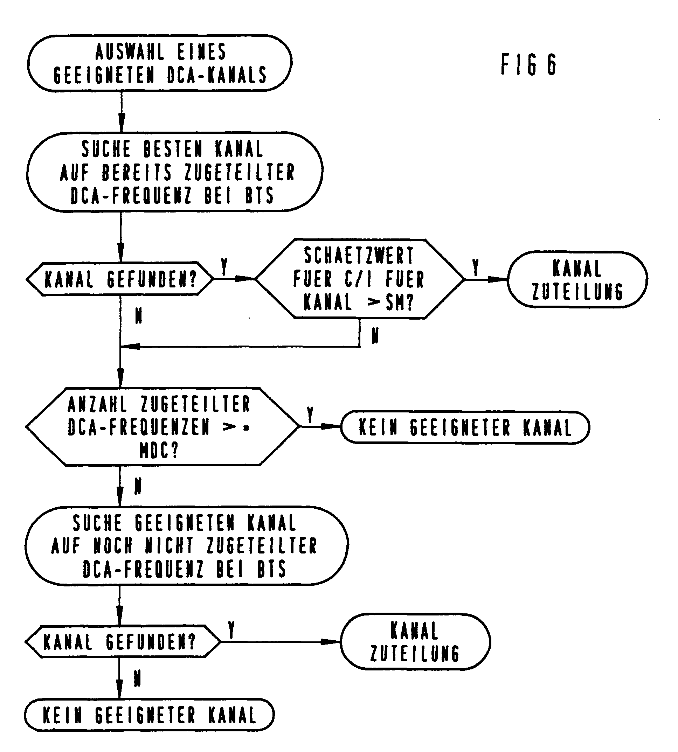

Bei der in Fig. 6 dargestellten Auswahl eines dynamisch zuteilbaren Kanals auf einer DCA-Frequenz D, auf die oben mehrfach Bezug genommen wurde, wird beispielsweise angenommen, daß nur eine beschränkte Anzahl von DCA-Frequenzen D gleichzeitig von einer Basisfunkstation BTS verwendet werden kann. Zunächst versucht die Basisstation BS einen geeigneten unbelegten Zeitschlitz auf einer DCA-Frequenz D zu finden, den die Basisfunkstation BTS zu dem jeweiligen Zeitpunkt bereits nutzt, d.h. von der schon ein oder mehrere Zeitschlitze zugeteilt sind. Auf diesen Frequenzen wird nach dem besten unbelegten Zeitschlitz, d.h. nach dem Zeitschlitz mit dem geringsten Interferenzpegel, gesucht. Falls jedoch alle Zeitschlitze auf dieser DCA-Frequenz D belegt sind, oder das geschätzte C/I-Verhältnis für den besten Zeitschlitz zu gering ist, d.h. unterhalb des Schwellenwertes SM liegt, wird nach einem geeigneten Nutzkanal auf einer anderen DCA-Frequenz D gesucht. Nach Möglichkeit wählt man dann eine solche aus, die noch nicht in der unmittelbaren Umgebung der Basisfunkstation BTS verwendet wird.

Falls schon die maximale Anzahl von DCA-Frequenzen D einer Basisfunkstation BTS vergeben sind, läßt sich selbstverständlich keine neue Frequenz vergeben. Dies wird durch die Anzahl MD angegeben, die die maximal mögliche Anzahl von DCA-Frequenzen D einer Basisfunkstation BTS anzeigt. Falls jedoch noch Frequenzen zur Verfügung stehen, wird ein Kanal auf einer noch nicht zugeteilten DCA-Frequenz D gesucht und gegebenenfalls zugeteilt.

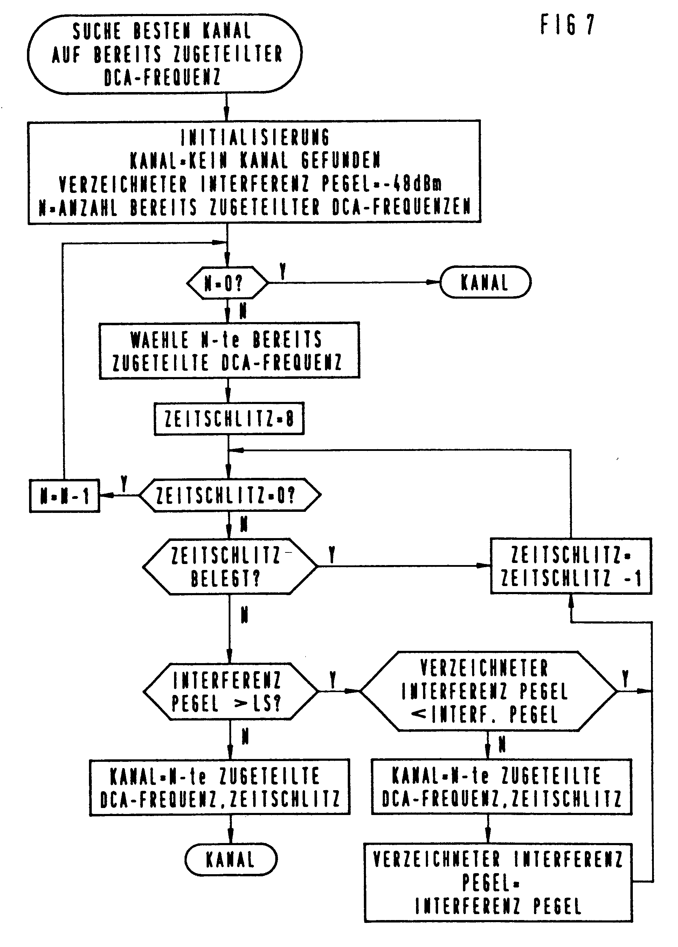

Bei der in Fig. 7 dargestellten Auswahl der besten Kanäle wird zunächst nacheinander auf jeder zugeteilten DCA-Frequenz (Zähler N) und dann für jede dieser Frequenzen auf jedem Zeitschlitz (Zähler Zeitschlitz) geprüft, ob der jeweilige Zeitschlitz belegt ist, solange bis ein freier Zeitschlitz gefunden wurde.

Wenn ein freier Kanal gefunden wird, so wird geprüft, ob der Interferenzpegel größer ist als die Empfängerempfindlichkeit, die durch einen Schwellenwert LS dargestellt wird. Wenn dies der Fall ist wird überprüft, ob der Interferenzpegel größer ist als ein gespeicherter Interferenzpegel. Andernfalls wird der entsprechende Zeitschlitz ausgewählt, denn ein niedrigerer Interferenzpegel kann nicht gemessen werden.

Läßt sich kein geeigneter Kanal auf einer bereits zugeteilten DCA-Frequenz finden (alle Zeitschlitze belegt oder geschätzter C/I-Wert für den besten niedriger als SM), dann muß ein Kanal auf einer neuen DCA-Frequenz gesucht werden (sofern noch eine weitere an der Basisstation BS, d.h. an der Basisfunkstation BTS zugeteilt werden darf).

Diese eine Frequenz sollte nach Möglichkeit nicht schon in der Nähe der betrachteten Basisfunkstation BTS verwendet werden.

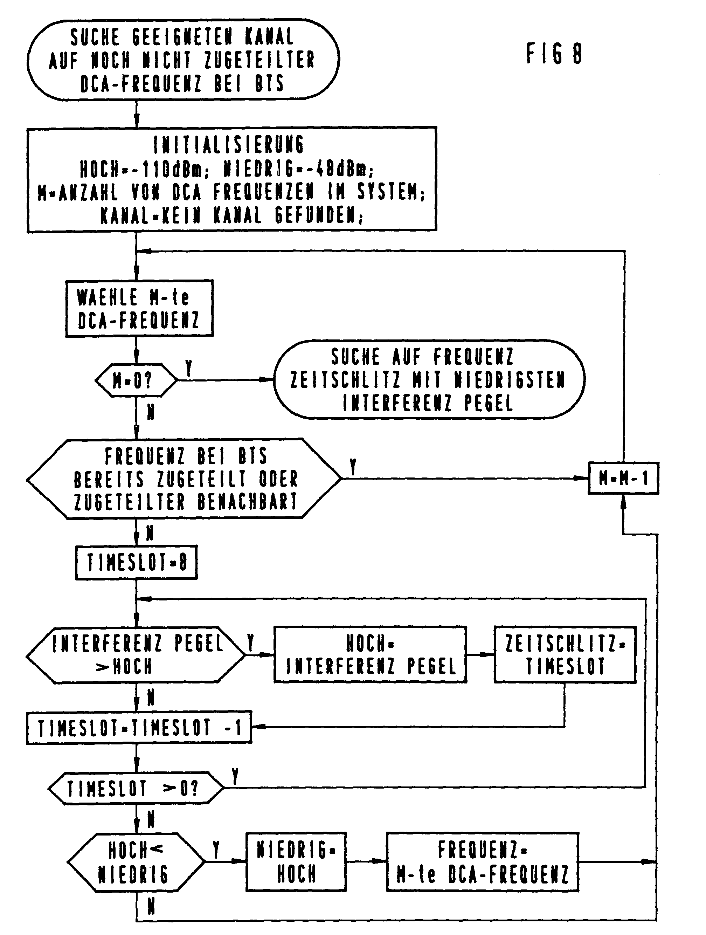

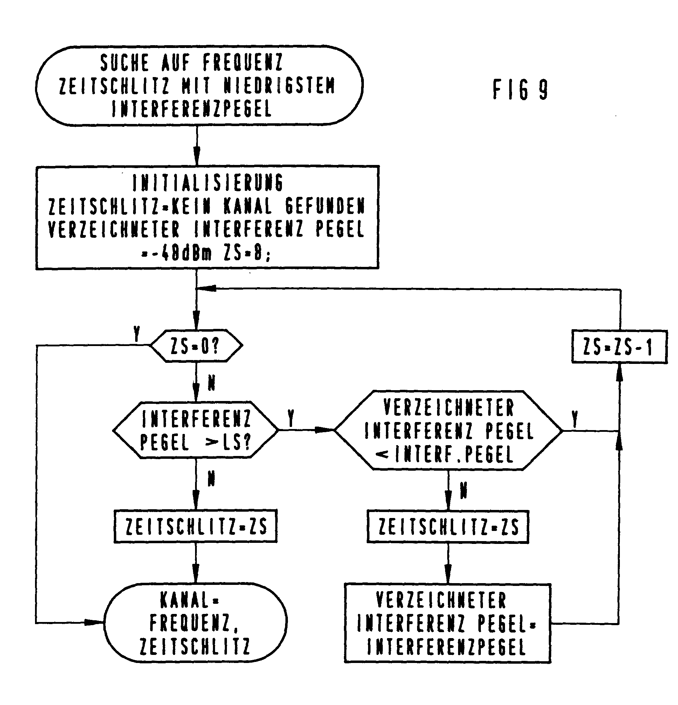

Die Basisfunkstation BTS kann die Verwendung einer bestimmten Frequenz in ihrer Umgebung dadurch erkennen, daß sie auf jeder Frequenz nach dem Zeitschlitz mit dem höchsten Interferenzpegel auf der jeweiligen Frequenz sucht. Ein niedriger Wert dieses höchsten Zeitschlitz-Interferenzpegels ist ein Zeichen dafür, daß die zugehörige Frequenz nur weit von der jeweiligen Basisfunkstation BTS verwendet wird und damit ein guter Kandidat für eine neue DCA-Frequenz D ist. Die Auswahl eines Kanals auf einer neuen DCA-Frequenz D ist in den Fig. 8 und Fig. 9 beschrieben. Man sucht zunächst, auf jeder zulässigen DCA-Frequenz D den Zeitschlitz mit dem höchsten Interferenzpegel. Alle diese Zeitschlitze werden zusammen mit den zugehörigen Interferenzpegeln aufgezeichnet. Die neu zuzuteilende DCA-Frequenz D ist dann diejenige, bei der der Interferenzpegel des schlechtesten Zeitschlitzes am niedrigsten ist. Auf dieser Frequenz wird der Zeitschlitz mit dem niedrigsten Interferenzpegel ausgewählt.

Sobald ein Kanal an der jeweiligen Basisfunkstation BTS frei wird, wird eine Re-allocation initiiert, um die Anzahl der an der Basisfunkstation BTS verwendeten DCA-Frequenzen D zu minimieren. Bei der Re-allocation versucht man ein Gespräch, das auf einer Frequenz geführt wird, auf der nur wenige Zeitschlitze belegt sind, auf eine FCA-Frequenz F oder eine andere DCA-Frequenz D mit mehr belegten Zeitschlitzen zu verlegen. Die Re-allocation kann damit als eine Art von Intracell-Handover aufgefaßt werden.

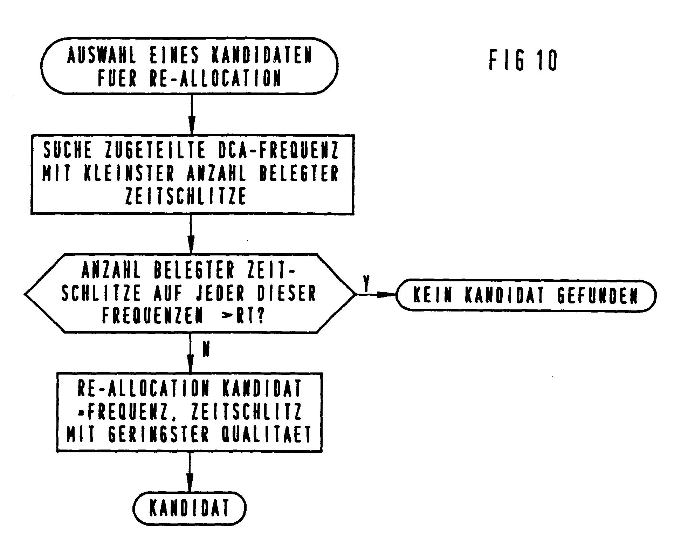

Wie es in Fig. 10 dargestellt ist, wird zunächst ein Kandidat ausgewählt, mit dem die Re-allocation durchgeführt werden soll. Zu diesem Zweck sucht man bei der jeweiligen Basisfunkstation BTS nach der zugeteilten DCA-Frequenz D mit der minimalen Anzahl belegter Zeitschlitze. Falls die Anzahl der belegten Zeitschlitze auf dieser Frequenz klein genug ist, was durch einen Vergleich mit dem Parameter RT festgestellt wird, so wird der belegte Zeitschlitz mit der niedrigsten Qualität als Kandidat für die Re-allocation ausgewählt. Andernfalls wird die Re-allocation beendet.

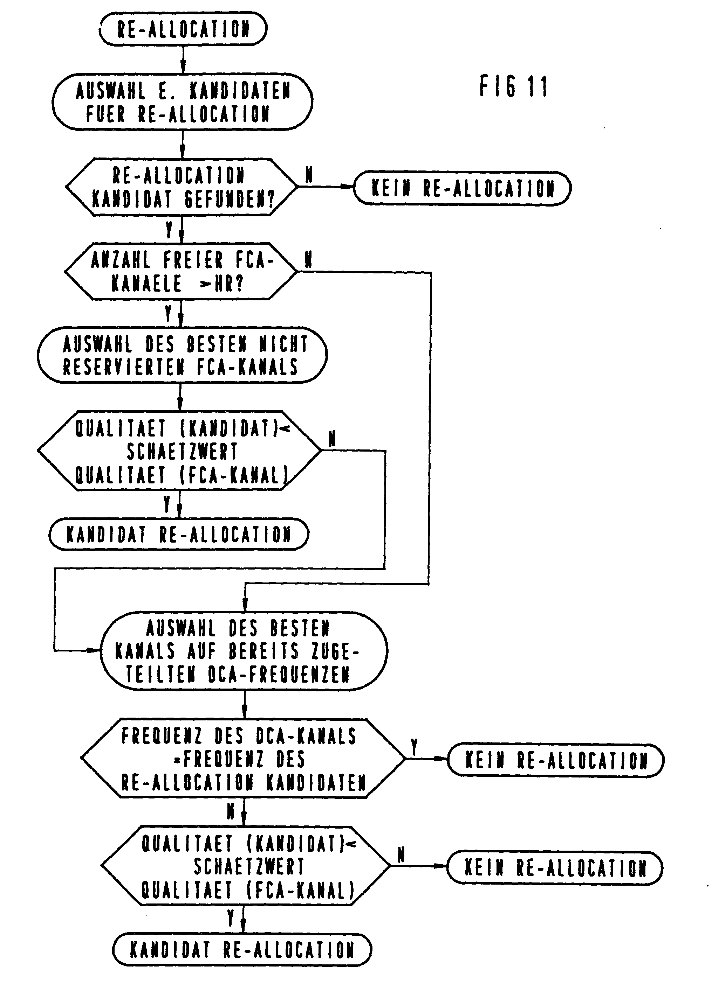

Für diesen Kandidaten für die Re-allocation wird dann, wie es in Fig. 11 dargestellt ist, zunächst ein neuer Kanal unter den nicht reservierten FCA-Kanälen F gesucht und der beste von diesen Kanälen wird selektiert. Falls der Schätzwert für die Qualität der neuen Verbindung nicht schlechter als die Qualität der bestehenden Verbindung ist, so wird die Re-allocation ausgeführt. Der Qualitätsvergleich erfolgt dabei in ähnlicher Weise wie beim Intracell-Handover, der oben beschrieben ist. Andernfalls versucht man einen geeigneten neuen Kanal auf den DCA-Frequenzen D mit mehr belegten Zeitschlitzen zu finden.

## Patentansprüche

1. Verfahren zum Zuteilen von Kanälen in einem Mobilfunksystem mit einer Mehrzahl von Funkzellen (C), denen jeweils mindestens eine Basisfunkstation (BTS) zugeordnet ist, wobei die Basisfunkstationen (BTS) mehrerer Zellen (C) jeweils mit einer Basisstationssteuerung (BSC) verbindbar sind, wobei Funkverbindungen zwischen den Mobilstationen (MS) und den Basisfunkstationen (BTS) auf mehreren Kanälen erfolgen können, von denen eine Mehrzahl von Kanälen (FC) fest vorgegeben ist, mindestens ein Kanal (DC) dynamisch zuteilbar ist und mindestens ein Kanal für eine Übertragung von Steuerinformation vorgesehen ist,
bei dem zunächst versucht wird, einen Kanal auf einer fest vorgegebenen Frequenz (F) auszuwählen und bei dem, falls kein Kanal auf dieser fest vorgegebenen Frequenz (F) zu Verfügung steht, ein Kanal auf einer dynamisch zuteilbaren Frequenz (D) ausgewählt wird,
**dadurch gekennzeichnet, dass**
bei der Zuteilung eines Kanals (FC, DC) der auf einem gerade verwendeten Kanal gemessene Nutzsignalpegel und der auf den freien Kanälen (FC, DC) gemessene Interferenzpegel als Beurteilungskriterium derart benutzt werden, dass der ausgewählte Kanal ein für eine Übertragung ausreichendes Nutz-/Störverhältnis (C/I) aufweist.

2. Verfahren nach Anspruch 1, bei dem mindestens einer der fest vorgegebenen Kanälen (FC) für eine Übergabe in Form eines Handovers reserviert ist, **dadurch gekennzeichnet, dass** bei der Auswahl eines Kanals berücksichtigt wird, dass von der Basisstation (BS) alle Frequenzen (F, D) benutzt werden können, jedoch nur eine beschränkte Anzahl der Frequenzen gleichzeitig benutzt werden kann.

3. Verfahren nach Anspruch 1 oder Anspruch 2, bei dem mindestens einer der Kanäle für eine Übergabe in Form eines Handovers reserviert ist, **dadurch gekennzeichnet, dass**, falls kein dynamisch zuteilbarer Kanal (DC) zur Verfügung steht, ein für die Übergabe reservierter Kanal (H) ausgewählt wird.

4. Verfahren nach Anspruch 3, bei dem eine Mehrzahl von für eine Übergabe verwendbare Kanäle (H) reserviert ist, **dadurch gekennzeichnet, dass** der schlechteste für die Übergabe reservierte Kanal (H) ausgewählt wird.

5. Verfahren nach einem der Ansprüche 1 bis 4, **dadurch gekennzeichnet, dass** zuerst versucht wird, den qualitativ besten Kanal auf der fest vorgegebenen Frequenz (F) zuzuteilen.

6. Verfahren nach einem der Ansprüche 1 bis 5, bei dem innerhalb einer Funkzelle eine Übergabe in Form eines Intracell-Handovers durchführbar ist, **dadurch gekennzeichnet, dass** die Übergabe nur dann erfolgt, wenn die erwartete Fehlerrate im neu zugeteilten Kanal (FC, DC) geringer ist als im vorhergehenden Kanal.

7. Verfahren nach einem der vorgehenden Ansprüche, **dadurch gekennzeichnet, dass** aus dem für den neuen Kanal geschätzten C/I Verhältnis mittels einer Umrechnungstabelle die zu erwartende Fehlerrate ermittelt wird.

8. Verfahren nach einem der vorangehenden Ansprüche, bei dem zwischen den Funkzellen eine Übergabe in Form eines Intercell-Handovers durchführbar ist, **dadurch gekennzeichnet, dass** ein Kanal auf einer dynamisch zuteilbaren Frequenz (D) nur dann ausgewählt wird, wenn dessen zu erwartende Qualität besser ist als diejenige des besten Kanals auf der festgelegten Frequenz (F).

9. Verfahren nach einem der vorgehenden Ansprüche, **dadurch gekennzeichnet, dass** ein Kanal auf einer dynamisch zuteilbaren Frequenz (D) nur dann ausgewählt wird, wenn dessen Interferenzpegel geringer ist als derjenige des besten Kanals auf einer festgelegten Frequenz (F).

10. Verfahren nach einem der vorangehenden Ansprüche, bei dem eine Mehrzahl von Frequenzen (D) vorgesehen ist, auf denen dynamisch zuteilbare Kanäle (DC) unterbringbar sind, **dadurch gekennzeichnet, dass** zunächst ein Kanal auf einer bereits vorgegebenen Frequenz (D) zugeteilt wird, bevor eine neue Frequenz (D) benutzt wird.

11. Verfahren nach Anspruch 10, **dadurch gekennzeichnet, dass** eine neue Frequenz (D) ausgewählt wird, indem man auf jeder Frequenz den Zeitschlitz mit dem höchsten Interferenzpegel sucht und dann diejenige Frequenz selektiert, bei der dieser jeweils höchste Interferenzpegel am niedrigsten ist.

12. Verfahren nach einem der vorgehenden Ansprüche, bei dem eine Zuordnung eines Kanals von einer Frequenz mit wenigen belegten Kanälen auf eine Frequenz mit vielen belegten Kanälen in Form einer Re-allocation erfolgt, **dadurch gekennzeichnet, dass** derjenige Kanal verlegt wird, der sich auf einer Frequenz (D) mit einer geringen Anzahl von belegten Kanälen befindet.

13. Verfahren nach Anspruch 12, **dadurch gekennzeichnet, dass** derjenige Kanal verlegt wird, der sich auf einer Frequenz (D) mit der geringsten Anzahl von belegten Kanälen befindet.

14. Verfahren nach Anspruch 12 oder 13, **dadurch gekennzeichnet, dass** die Verlegung auf einen Kanal auf der festen vorgegebenen Frequenz (F) erfolgt.

15. Verfahren nach einem der Ansprüche 12 bis 14, **dadurch gekennzeichnet, dass** die Verlegung auf den besten nicht für eine Übergabe reservierten Kanal erfolgt.

16. Verfahren nach Anspruch 15, **dadurch gekennzeichnet, dass** die Verlegung auf einen Kanal (DC) mit mindestens gleicher Qualität auf einer Frequenz (D) mit mehr belegten Zeitschlitzen erfolgt.

17. Verfahren nach Anspruch 12, **dadurch gekennzeichnet, dass** die Verlegung zunächst auf den besten nicht für eine Übergabe reservierten Kanal versucht wird, dass dann, falls dies nicht möglich ist, die Verlegung auf einen freien Kanal auf der fest vorgegebenen Frequenz (F) erfolgt und dass dann, wenn auch dies nicht möglich ist, die Verlegung auf den besten Kanal (DC) auf einer bereits zugeteilten dynamisch zuteilbaren Frequenz (D) erfolgt.

18. Verfahren nach einem der vorhergehenden Ansprüche, **dadurch gekennzeichnet, dass** das Auswählen eines Kanals (FC, DC) abgebrochen wird, sobald der gemessene Interferenzpegel einen vorgegebenen Schwellenwert unterschreitet.

19. Mobilfunksystem mit einer Mehrzahl von Mobilstationen (MS) und einer Mehrzahl von Basisstationen (BS), wobei Funkverbindungen zwischen den Mobilstationen (MS) und den Basisstationen (BS) auf mehreren Kanälen erfolgen können, von denen eine Mehrzahl von Kanälen (FC) fest vorgegeben ist, mindestens ein Kanal (DC) dynamisch zuteilbar ist und mindestens ein Kanal für eine Übertragung von Steuerinformationen vorgesehen ist,
bei der die Basisstation (BS) derart ausgebildet ist, dass sie zunächst versucht, einen Kanal auf einer fest vorgegebenen Frequenz (F) auszuwählen, dass sie, falls kein Kanal auf dieser fest vorgegebenen Frequenz (F) zur Verfügung steht, einen Kanal auf einer dynamisch zuteilbaren Frequenz (D) auswählt,
**dadurch gekennzeichnet, dass**
die Basisstation (BS) derart ausgebildet ist, dass sie bei der Zuteilung eines Kanals (FC, DC) den auf einem gerade verwendeten Kanal gemessenen Nutzsignalpegel und den auf den freien Kanälen (FC, DC) gemessenen Interferenzpegel als Beurteilungskriterium derart benutzt, dass der ausgewählte Kanal ein für eine Übertragung ausreichendes Nutz-/Störverhältnis (C/I) aufweist.

20. Basisstation für ein Mobilfunksystem mit einer Mehrzahl von Mobilstationen (MS) und einer Mehrzahl von Basisstationen (BS), wobei Funkverbindungen zwischen den Mobilstationen (MS) und den Basisstationen (BS) auf mehreren Kanälen erfolgen können, von denen mindestens ein Kanal (FC) fest vorgegeben ist, mindestens ein Kanal (DC) dynamisch zuteilbar ist und mindestens ein Kanal für eine Übertragung von Steuerinformationen vorgesehen ist, bei der die Basisstation (BS) Einrichtungen aufweist, mittels denen sie zunächst versucht, einen Kanal auf einer fest vorgegebenen Frequenz (F) auszuwählen, dann, wenn kein Kanal auf dieser fest vorgegebenen Frequenz (F) zur Verfügung steht, einen Kanal auf einer dynamisch zuteilbaren Frequenz (D) auswählt,
**dadurch gekennzeichnet, dass**
die Basisstation (BS) Einrichtungen aufweist, mittels denen sie bei der Zuteilung eines Kanals (FC, DC) den
auf einem gerade verwendeten Kanal gemessenen Nutzsignalpegel und den auf den freien Kanälen (FC, DC) gemessenen Interferenzpegel als Beurteilungskriterium derart benutzt, dass der ausgewählte Kanal ein für eine Übertragung ausreichendes Nutz-/Störverhältnis (C/I) aufweist.

## Claims

1. Method for assigning channels in a mobile radio system having two or more radio cells (C), each of which has at least one associated base radio station (BTS), in which the base radio stations (BTS) of two or more cells (C) can each be connected to a base station controller (BSC), in which radio links can be set up on two or more channels between the mobile stations (MS) and the base radio stations (BTS), two or more of which channels (FC) are predetermined in a fixed manner, at least one channel (DC) can be assigned dynamically and at least one channel is intended for transmission of control information for which an attempt is first of all made to select a channel on a fixed predetermined frequency (F) and for which, if no channel is available at this fixed predetermined frequency (F), a channel is selected at a frequency (D) which can be assigned dynamically,
**characterized in that**
when assigning a channel (FC, DC), the useful signal level which is measured on a currently used channel and the interference level which is measured on the free channels (FC, DC) are used as an assessment criterion such that the selected channel has a signal-to-noise ratio (C/I) which is adequate for transmission.

2. Method according to Claim 1, in which at least one of the fixed predetermined channels (FC) is reserved for a handover, **characterized in that**, when selecting a channel, care is taken to ensure that all the frequencies (F, D) can be used by the base station (BS), but only a restricted number of frequencies can be used at the same time.

3. Method according to Claim 1 or Claim 2, in which at least one of the channels is reserved for a handover, **characterized in that**, if no channel (DC) which can be assigned dynamically is available, a channel (H) which is reserved for the handover is selected.

4. Method according to Claim 3, in which two or more channels (H) which can be used for a handover are reserved, **characterized in that** the poorest channel (H) which is reserved for the handover is selected.

5. Method according to one of Claims 1 to 4, **characterized in that** an attempt is first of all made to assign the channel with the best quality to the fixed predetermined frequency (F).

6. Method according to one of Claims 1 to 5, in which a handover in the form of an intracell-handover can be carried out within a radio cell, **characterized in that** the handover is carried out only when the expected error rate in the newly assigned channel (FC, DC) is lower than in the previous channel.

7. Method according to one of the preceding claims, **characterized in that** the error rate to be expected is determined by means of a conversion table from the C/I ratio estimated for the new channel.

8. Method according to one of the preceding claims, in which a handover in the form of an intercell-handover can be carried out between the radio cells, **characterized in that** a channel is selected at a frequency (D) which can be assigned dynamically only when the quality which can be expected at this frequency is better than that of the best channel at the fixed frequency (F).

9. Method according to one of the preceding claims, **characterized in that** a channel at a frequency (D) which can be assigned dynamically is selected only when its interference level is lower than that of the best channel at a fixed frequency (F).

10. Method according to one of the preceding claims, in which two or more frequencies (D) are provided, on which channels (DC) which can be assigned dynamically can be accommodated, **characterized in that** a channel at a frequency (D) which has already been predetermined is assigned first of all, before a new frequency (D) is used.

11. Method according to Claim 10, **characterized in that** a new frequency (D) is selected by looking for the time slot with the highest interference level at each frequency, and then selecting that frequency of those which in each case have the highest interference levels which has the lowest interference levels.

12. Method according to one of the preceding claims, in which a channel is allocated from a frequency with few used channels to a frequency with a large number of used channels in the form of a reallocation process, **characterized in that** the channel which is moved is that which is at a frequency (D) with a small number of used channels.

13. Method according to Claim 12, **characterized in that** the channel which is moved is that which is at a frequency (D) with the smallest number of used channels.

14. Method according to Claim 12 or 13, **characterized in that** the channel is moved to a channel at the fixed predetermined frequency (F).

15. Method according to one of Claims 12 to 14, **characterized in that** the channel is moved to the best channel which is not reserved for a handover.

16. Method according to Claim 15, **characterized in that** the channel is moved to a channel (DC) whose quality is at least the same at a frequency (D) with more used time slots.

17. Method according to Claim 12, **characterized in that** an attempt is first of all made to move the channel to the best channel which is not reserved for a handover and **in that**, if this is not possible, the channel is then moved to a free channel at the fixed predetermined frequency (F) and **in that**, if none of this is possible, the channel is moved to the best channel (DC) at a frequency (D) which can be assigned dynamically and which has already been assigned.

18. Method according to one of the preceding claims, **characterized in that** the process of selecting a channel (FC, DC) is terminated as soon as the measured interference level falls below a predetermined threshold value.

19. Mobile radio system having two or more mobile stations (MS) and two or more base stations (BS), in which radio connections can be set up between the mobile stations (MS) and the base stations (BS) on two or more channels, of which two or more channels (FC) are predetermined in a fixed manner, at least one channel (DC) can be assigned dynamically and at least one channel is intended for transmission of control information, in which the base station (BS) is designed such that it first of all attempts to select a channel at a fixed predetermined frequency (F) and such that, if no channel is available at this fixed predetermined frequency (F), it selects a channel at a frequency (D) which can be assigned dynamically,
**characterized in that**
the base station (BS) is designed such that, when assigning a channel (FC, DC) it uses the useful signal level which is measured on a currently used channel and the interference level which is measured on the free channels (FC, DC) as an assessment criterion, such that the selected channel has a signal-to-noise ratio (C/I) which is sufficient for transmission.

20. Base station for a mobile radio system having two or more mobile stations (MS) and two or more base stations (BS), in which radio connections can be set up between the mobile stations (MS) and the base stations (BS) on two or more channels, of which at least one channel (FC) is predetermined in a fixed manner, at least one channel (DC) can be assigned dynamically and at least one channel is intended for transmission of control information, in which the base station (BS) is designed such that it first of all attempts to select a channel at a fixed predetermined frequency (F) and such that, if no channel is available at this fixed predetermined frequency (F), it selects a channel at a frequency (D) which can be assigned dynamically,
**characterized in that**
the base station (BS) is designed such that, when assigning a channel (FC, DC) it uses the useful signal level which is measured on a currently used channel and the interference level which is measured on the free channels (FC, DC) as an assessment criterion, such that the selected channel has a signal-to-noise ratio (C/I) which is sufficient for transmission.

## Revendications

1. Procédé pour l'attribution de canaux dans un système radio-mobile avec une pluralité de cellules radio (C), à chacune desquelles est attribuée au moins une station radio de base (BTS), les stations radio de base (BTS) de plusieurs cellules (C) pouvant être reliées respectivement à une commande de station de base (BSC), des liaisons radio pouvant s'effectuer entre les stations mobiles (MS) et les stations radio de base (BTS) sur plusieurs canaux, parmi lesquels une pluralité de canaux (FC) est prédéfinie de façon fixe, au moins un canal (DC) peut être attribué de façon dynamique et au moins un canal est prévu pour une transmission d'informations de commande, dans lequel on tente d'abord de choisir un canal sur une fréquence (F) prédéfinie de façon fixe et dans lequel, si aucun canal n'est disponible sur cette fréquence (F) prédéfinie de façon fixe, on choisit un canal sur une fréquence (D) pouvant être attribuée de façon dynamique,
**caractérisé en ce que**,
lors de l'attribution d'un canal (FC, DC), le niveau du signal utile mesuré sur un canal précisément utilisé et le niveau d'interférence mesuré sur les canaux libres (FC, DC) sont utilisés comme critère d'évaluation de telle sorte que le canal choisi présente un rapport signal/parasite (C/I) suffisant pour une transmission.

2. Procédé selon la revendication 1, dans lequel au moins l'un des canaux (FC) prédéfinis de façon fixe est réservé pour un transfert sous la forme d'un Handover, **caractérisé en ce que**, pour le choix d'un canal, on tient compte du fait que toutes les fréquences (F, D) peuvent être utilisées par la station de, base (BS), mais seulement un nombre limité des fréquences peut être utilisé en même temps.

3. Procédé selon la revendication 1 ou la revendication 2, dans lequel au moins l'un des canaux est réservé pour un transfert sous la forme d'un Handover, **caractérisé en ce que**, si aucun canal (DC) pouvant être attribué de façon dynamique n'est disponible, on choisit un canal (H) réservé pour le transfert.

4. Procédé selon la revendication 3, dans lequel une pluralité de canaux (H) pouvant être utilisés pour un transfert est réservé, **caractérisé en ce que** le plus mauvais canal (H) réservé pour le transfert est choisi.

5. Procédé selon l'une quelconque des revendications 1 à 4, **caractérisé en ce qu'**on tente d'abord d'attribuer le meilleur canal au plan qualitatif sur la fréquence (F) prédéfinie de façon fixe.

6. Procédé selon l'une quelconque des revendications 1 à 5, dans lequel un transfert peut être réalisé sous la forme d'un Intracell Handover à l'intérieur d'une cellule radio, **caractérisé en ce que** le transfert ne s'effectue que dans les cas où le taux d'erreur escompté dans le nouveau canal attribué (FC, DC) est plus faible que dans le canal précédent.

7. Procédé selon l'une quelconque des revendications précédentes, **caractérisé en ce que** le taux d'erreur à escompter est déterminé à partir du rapport C/I évalué pour le nouveau canal au moyen d'un tableau de conversion.

8. Procédé selon l'une quelconque des revendications précédentes, dans lequel un transfert peut être réalisé sous la forme d'un Intercell Handover entre les cellules radio, **caractérisé en ce qu'**un canal est choisi sur une fréquence (D) pouvant être attribuée de façon dynamique seulement dans les cas où la qualité à escompter est meilleure que la qualité du meilleur canal sur la fréquence (F) prédéfinie.

9. Procédé selon l'une quelconque des revendications précédentes, **caractérisé en ce qu'**un canal est choisi sur une fréquence (D) pouvant être attribuée de façon dynamique seulement dans les cas où son niveau d'interférence est plus faible que celui du meilleur canal sur une fréquence (F) définie.

10. Procédé selon l'une quelconque des revendications précédentes, dans lequel il est prévu une pluralité de fréquences (D), sur lesquelles des canaux (DC) pouvant être attribués de façon dynamique peuvent être logés, **caractérisé en ce qu'**on attribue d'abord un canal sur une fréquence (D) déjà prédéfinie avant qu'une nouvelle fréquence (D) soit utilisée.

11. Procédé selon la revendication 10, **caractérisé en ce qu'**une nouvelle fréquence (D) est choisie en recherchant sur chaque fréquence le créneau temporel avec le niveau d'interférence maximum et on sélectionne la fréquence pour laquelle ce niveau d'interférence maximum concerné est le plus faible.

12. Procédé selon l'une quelconque des revendications précédentes, dans lequel une attribution d'un canal par une fréquence avec des canaux moins occupés à une fréquence avec de nombreux canaux occupés s'effectue sous la forme d'une Re-allocation, **caractérisé en ce qu'**on déplace le canal qui se trouve sur une fréquence (D) présentant un nombre faible de canaux occupés.

13. Procédé selon la revendication 12, **caractérisé en ce qu'**on déplace le canal qui se trouve sur une fréquence (D) avec le plus petit nombre de canaux occupés.

14. Procédé selon la revendication 12 ou 13, **caractérisé en ce que** le déplacement s'effectue sur un canal avec la fréquence (F) prédéfinie et fixe.

15. Procédé selon l'une quelconque des revendications 12 à 14, **caractérisé en ce que** le déplacement s'effectue sur le meilleur canal non réservé pour un transfert.

16. Procédé selon la revendication 15, **caractérisé en ce que** le déplacement sur un canal (DC) s'effectue avec au moins la même qualité sur une fréquence (D) avec des créneaux temporels davantage occupés.

17. Procédé selon la revendication 12, **caractérisé en ce que** le déplacement est tenté d'abord sur le meilleur canal non réservé pour un transfert, **en ce qu'**ensuite, si ceci est impossible, le déplacement s'effectue sur un canal libre sur la fréquence (F) prédéfinie de façon fixe et **en ce qu'**ensuite, si même ceci est impossible, le déplacement sur le meilleur canal (DC) s'effectue sur une fréquence (D) pouvant être attribuée de façon dynamique et déjà attribuée.

18. Procédé selon l'une quelconque des revendications précédentes, **caractérisé en ce que** la sélection d'un canal (FC, DC) est arrêtée dès que le niveau d'interférence mesuré est inférieur à une valeur seuil prédéfinie.

19. Système radio-mobile avec une pluralité de stations mobiles (MS) et une pluralité de stations de base (BS), des liaisons radio entre les stations mobiles (MS) et les stations, de base (BS) pouvant s'effectuer sur plusieurs canaux, dont une pluralité de canaux (FC) est prédéfinie de façon fixe, au moins un canal (DC) peut être attribué de façon dynamique et au moins un canal est prévu pour une transmission d'information de commande, lors de laquelle la station de base (BS) est conçue de telle sorte qu'elle tente d'abord de sélectionner un canal sur une fréquence (F) prédéfinie de façon fixe, que si aucun canal n'est disponible sur cette fréquence (F) prédéfinie de façon fixe, elle sélectionne un canal sur une fréquence (D) pouvant être attribuée de façon dynamique,
**caractérisé en ce que**
la station de base (BS) est conçue de telle sorte qu'elle utilise lors de l'attribution d'un canal (FC, DC) le niveau du signal utile mesuré sur un canal précisément utilisé et le niveau d'interférence mesuré (FC, DC) sur les canaux libres comme critère d'évaluation de telle sorte que le canal sélectionné présente un rapport signal/parasite (C/I) suffisant pour une transmission.

20. Station de base pour un système radio-mobile avec une pluralité de stations mobiles (MS) et une pluralité de stations de base (BS), des liaisons radio pouvant s'effectuer entre les stations mobiles (MS) et les stations de base (BS) sur plusieurs canaux, dont au-moins un canal (FC) est prédéfini de façon fixe, au moins un canal (DC) peut être attribué de façon dynamique et au moins un canal est prévu pour une transmission d'informations de commande, lors de laquelle la station de base (BS) présente des équipements au moyen desquels elle tente d'abord de sélectionner un canal sur une fréquence (F) prédéfinie de façon fixe puis, dans les cas où aucun canal n'est disponible sur cette fréquence (F) prédéfinie de façon fixe, sélectionne un canal (D) pouvant être attribué de façon dynamique,
**caractérisée en ce que**
la station de base (BS) présente des équipements au moyen desquels elle utilise lors de l'attribution d'un canal (FC, DC) le niveau de signal utile mesuré sur un canal précisément utilisé et le niveau d'interférence mesuré sur les canaux libres (FC, DC) comme critère d'évaluation de telle sorte que le canal choisi présente un rapport signal/parasite (C/I) suffisant pour une transmission.
